# EUROPÄISCHE PATENTSCHRIFT

(11) **EP 1 131 237 B1**
(45) Veröffentlichungstag und Bekanntmachung des Hinweises auf die Patenterteilung: **02.07.2003**
(21) Anmeldenummer: 98922668.3
(22) Anmeldetag: 08.04.1998
(51) Int. Cl.: B62B 5/00, A63B 55/08, B60B 35/10

(54) **TRANSPORTWAGEN FÜR KLEINLASTEN, INSBESONDERE GOLFWAGEN**
CADDIE CART FOR CARRYING SMALL LOADS, SPECIALLY A GOLF CADDIE
CHARIOT DE TRANSPORT POUR PETITES CHARGES, NOTAMMENT CHARIOT DE GOLF

(30) Priorität: 08.04.1997 DE 19714374
(43) Veröffentlichungstag der Anmeldung: 12.09.2001
(73) Patentinhaber: Weber, Gerhard, 78559 Gosheim (DE)
(72) Erfinder: Weber, Gerhard, 78559 Gosheim (DE)
(74) Vertreter: Pfiz, Thomas, Dr.
(86) Internationale Anmeldenummer: EP9802047
(87) Internationale Veröffentlichungsnummer: WO98045154

(56) Entgegenhaltungen:
- EP-A- 0 241 377
- DE-A- 4 407 627
- US-A- 4 570 731
- US-A- 4 681 341
- US-A- 4 834 409

## Beschreibung

Die Erfindung betrifft einen Transportwagen für Kleinlasten, insbesondere Golfwagen, gemäß dem Oberbegriff des Anspruchs 1. Ein derartiger Transportwagen wird von der US-A-4,834,409 gezeigt.

Golfwagen dieser Art werden von Golfspielern zum Transport von Golftaschen und der darin bereitgehaltenen Golfschläger und Utensilien benutzt, wobei gegebenenfalls ein Elektromotor als Antrieb vorgesehen ist. Beim Einsatz im Gelände soll eine ausreichende Kippstabilität gewährleistet sein, während bei Nichtgebrauch eine kompakte Bauform zur Lagerung in der sogenannten Caddie-Halle am Golfplatz bzw. zur Mitnahme auf Reisen erwünscht ist. Bekannte Golfwagen sind jedoch vor allem in motorisierten Ausführungen sperrig oder aber erfordern eine umständliche Montage zur Herstellung des Gebrauchszustands.

Ausgehend hiervon liegt der Erfindung die Aufgabe zugrunde, einen Transportwagen zu schaffen, der gute Fahreigenschaften und Fahrsicherheit auch in unebenem Gelände besitzt, und der sich mit geringem Platzbedarf abstellen bzw. verstauen läßt, wobei eine einfache Handhabung gewährleistet sein soll.

Diese Aufgabe wird nach der Erfindung durch die Merkmalskombination des Patentanspruchs 1 gelöst. Vorteilhafte Ausgestaltungen und Weiterbildungen der Erfindung ergeben sich aus den abhängigen Ansprüchen.

Die Seitenräder werden an den freien Enden einer Teleskopachse getragen, die unter Änderung der Spurweite teleskopierbar ist. Damit sorgen im ausgefahrenen Zustand der Teleskopachse die seitlich am Fahrgestell abstehenden Räder für eine ausreichende Standsicherheit auch bei hochstehender Last. Bei Nichtgebrauch des Wagens lassen sich die Seitenräder auf einfache Weise einfahren, wobei keine Bauteile seitlich überstehen und die Manövrierfähigkeit dennoch erhalten bleibt.

Die Teleskopachse weist zwei an den Längsseiten des Fahrgestells quer abstehende, jeweils eines der Seitenräder führende Teleskopschenkel auf. Diese können durch ein endseitig zugleich als Radnabe für das drehfest befestigte Seitenrad ausgebildetes äußeres Achsrohr und eine in das Achsrohr eintauchende, fahrgestellseitig gelagerte Achswelle gebildet sein.

Die Teleskopschenkel sind über eine verrastbare Steckverbindung lösbar mit dem Fahrgestell verbunden. Damit lassen sich die Räder zur platzsparenden Verstauung des Wagens auf einfache Weise vollständig abnehmen.

Als Teil eines Antriebsstranges kann die Teleskopsachse Mittel zur drehfesten Verbindung des Achsrohrs und der Achswelle ihrer Teleskopschenkel aufweisen, so daß zumindest in einer fahrgestellfernen Fahrstellung und einer fahrgestellnahen Parkstellung der Seitenräder ein Drehmoment übertragbar ist.

Zur Verdrehsicherung bei der Übertragung eines Antriebsmoments ist es vorteilhaft, wenn die Teleskopachse eine ausgeführte, axial verlaufende Schubführung aufweist. Diese kann als reibungsarme Wälzführung durch mehrere, vorzugsweise drei über den Umfang der Achswelle verteilte Laufbahnrillen und jeweils einen achsrohrseitig gelagerten, vorzugsweise als Kugel ausgebildeten Wälzkörper gebildet sein. Denkbar ist es auch, daß die Schubführung eine längs der Achswelle verlaufende Führungsnut und einen in der Führungsnut geführten, mit dem Achsrohr fest verbundenen Gleitstein aufweist.

Zur Sicherung einer fahrgestellfernen Fahrstellung und einer fahrgestellnahen Parkstellung der Seitenräder ist vorteilhafterweise eine Sperrvorrichtung vorgesehen, die insbesondere als Rastgesperre ausgebildet sein kann. In einer vorteilhaften, leicht zu lösenden Ausführung weist die Sperrvorrichtung eine an dem Achsrohr gefedert gelagerte, vorzugsweise über eine Halteschraube abgestützte Rastkugel auf, welche in der Fahr- und Parkstellung in jeweils eine entsprechend angeordnete Rastausnehmung im Mantel des Achsrohrs selbsttätig einrastet.

Für eine besonders belastbare und dennoch spielarme Verbindung ist es von Vorteil, wenn die Achswellen einen kegeligen Stirnzapfen aufweisen, der in eine kegelige Bohrung einer an dem Fahrgestell vorzugsweise über Rillenkugellager drehbar gelagerten Achsaufnahme einsteckbar ist. Weiter ist es zur Erleichterung der Montage von Vorteil, wenn die Achswellen fahrgestellseitig einrastbare Rastmittel und einen Auslösemechanismus zum Auslösen der Rastmittel aus ihrer Raststellung aufweisen. Dies kann dadurch realisiert werden, daß die Achswellen als Hohlwellen ausgebildet sind und daß der Auslösemechanismus einen im Inneren der Hohlwelle geführten Auslösestößel aufweist, der durch Verschiebung des Achsrohrs in eine Hubbewegung versetzbar ist und dabei auf die Rastmittel einwirkt.

Gemäß einer vorteilhaften Ausgestaltung der Erfindung ist eine an das fahrgestellnahe Ende der Schubführung anschließende, mit schraubenlinienförmiger Führungsbahn über einen Teil des Umfangs der Teleskopachse verlaufende Drehführung vorgesehen, wobei ein Anschlag den Auslösestößel bei Bewegung des Achsrohres entlang der Drehführung in eine der Ganghöhe der Drehführung entsprechende Hubbewegung versetzt. Damit ist es möglich, die Steck-Rastverbindung durch Ausübung einer Drehkraft auf das Seitenrad ohne weitere Hilfsmittel zu lösen. Zugleich wird damit erreicht, daß der Auslösevorgang von der durch Ausübung einer Schubkraft erfolgenden Teleskopverstellung mechanisch entkoppelt ist.

In einer baulich vorteilhaften Ausführung weist der Auslösestößel an seinem in den Stirnzapfen eingreifenden Ende ein mit einer Ringnut versehenes zylindrisches Druckstück auf, das mindestens eine den Mantel des Stirnzapfens durchgreifende Kugel in Abhängigkeit von der Hublage des Auslösestößels mit einer Nutflanke oder dem Nutgrund der Ringnut in unterschiedlichen Radiailagen abstützt.

Um den Fahrkomfort durch einen motorischen Antrieb zu erhöhen, können die um eine gemeinsame Drehachse drehbar angeordneten Teleskopschenkel über jeweils einen in einer Drehrichtung sperrenden Freilauf mit den freien Enden einer gemeinsamen Antriebswelle verbunden sein. Diese ist vorteilhafterweise über einen Riementrieb mit einem auf dem Fahrgestell angeordneten, batteriegespeistem Elektromotor gekoppelt.

Eine weitere Verbesserung der Fahreigenschaften läßt sich dadurch erreichen, daß das Fahrwerk ein in Fahrtrichtung im Abstand vorzugsweise vor den Seitenrädern angeordnetes, insbesondere als Zwillingsrad ausgebildetes Stützrad aufweist. Dieses kann zur Stabilisierung des Geradeauslaufs als vorderes Führungsrad unter Einhaltung eines Nachlaufs um eine Schwenkachse drehbar an einem Vorderteil des Fahrgestells aufgehängt sein. Bei einer solchen Ausführungsform läßt sich die Wagenlänge bei Bedarf mittels Verlängerungsstangen reduzieren, die ein Längsmittelstück des Fahrgestells bilden und unter Verkürzung des Radstandes der Seitenräder und des Stützrades in ein Chassisteil des Fahrgestells einschiebbar sind.

Vorteilhafterweise ist eine zur Lenkung des Wagens bestimmte deichselartige Lenkvorrichtung mit dem Fahrgestell starr verbindbar und im gelösten Zustand platzsparend teilbar oder faltbar. Die Lenkvorrichtung kann auch dazu vorgesehen sein, eine Halterung für eine Golftasche zu tragen.

Im folgenden wird die Erfindung anhand eines in der Zeichnung in schematischer Weise dargestellten Ausführungsbeispiels näher erläutert. Es zeigen:
- Fig. 1: einen Golfwagen mit einer daran befestigten Golftasche in einer Seitenansicht;
- Fig. 2: das Fahrwerk des Golfwagens nach Fig. 1 in einer teilweise geschnittenen Draufsicht;
- Fig. 3: eine Schnittdarstellung eines Teleskopschenkels des Fahrwerks nach Fig. 2;
- Fig. 4: eine Teleskopwelle des Teleskopschenkels nach Fig. 3 in einer um 90° gedrehten Lage, und
- Fig. 5: einen vergrößerten Ausschnitt der fahrgestellseitigen Lagerung des Teleskopschenkels nach Fig. 3.

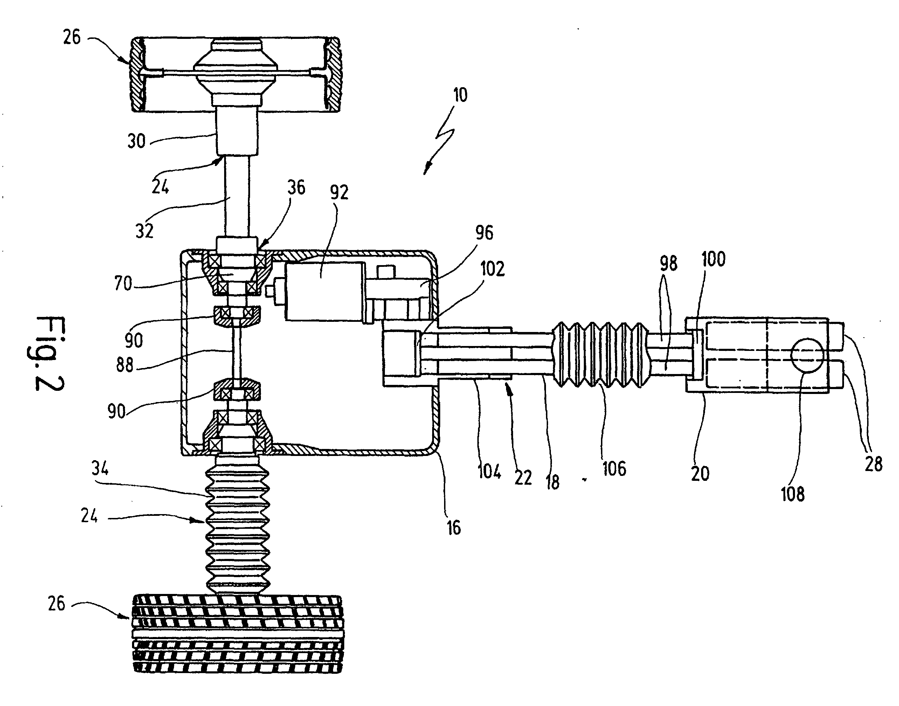

Der in der Zeichnung dargestellte Golfwagen besteht im wesentlichen aus einem Fahrwerk 10, einer Antriebseinheit 12 und einer Lenkvorrichtung 14. Das Fahrwerk 10 umfaßt ein aus einem hinteren Chassisteil 16, einem Längsmittelstück 18 und einem Vorderteil 20 bestehendes langgestrecktes Fahrgestell 22, zwei an dem Chassisteil 16 in Fahrtrichtung quer abstehende, eine längenverstellbare Teleskopachse bildende Teleskopschenkel 24 und zwei an den freien Enden der Teleskopschenkel 24 befestigte Seitenräder 26 sowie ein an dem Vorderteil 20 des Fahrgestells 22 schwenkbar angeordnetes, als Zwillingsrad ausgeführtes Stützrad 28 (Fig. 2).

Jeder der Teleskopschenkel 24 ist durch ein äußeres Achsrohr 30 und eine damit teleskopierende Achswelle 32 gebildet und durch einen Faltenbalg 34 gegen das Eindringen von Schmutz und Wasser geschützt. Um eine einfache Demontage zu ermöglichen, sind die freien Enden der Teleskopwellen 32 über eine verrastbare Steckverbindung 36 lösbar mit dem Chassisteil 16 verbunden.

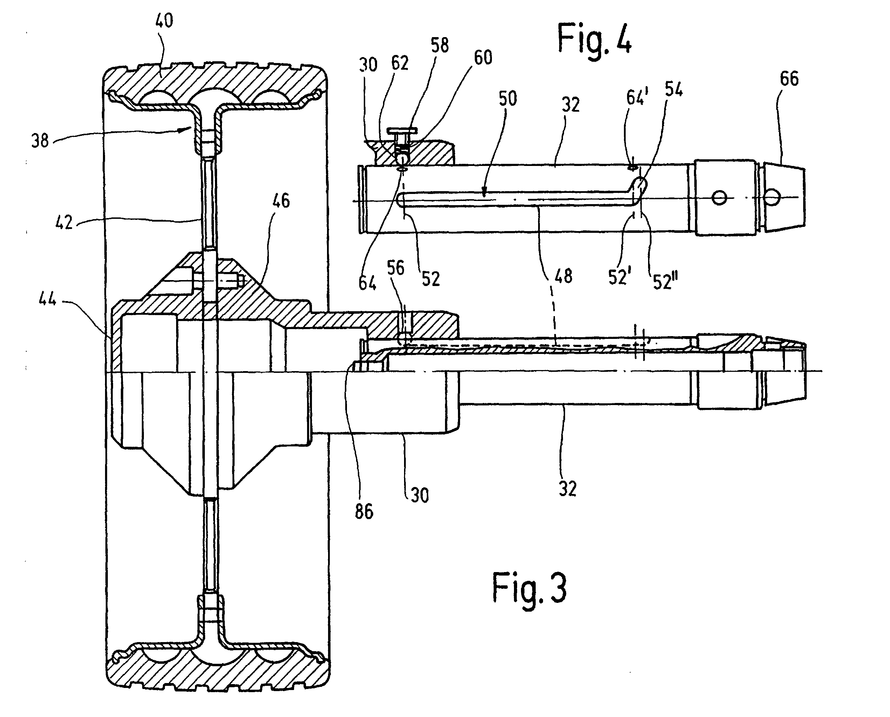

Wie aus Fig. 3 ersichtlich, weisen die Seitenräder 26 eine mehrteilige Flachbettfelge 38 auf, auf die ein profilierter Vollgummireifen 40 aufgezogen ist. Zur drehfesten Verbindung mit dem Teleskopschenkel 24 ist ein kreisscheibenförmiger Felgenkranz 42 der Flachbettfelge 38 über einen Nabendeckel 44 durchgreifende Befestigungsschrauben an der Stirnfläche eines die Radnabe bildenden Flanschstücks 46 des Achsrohrs 30 drehfest angeschraubt.

Um ein Antriebsmoment auf die Seitenräder 40 übertragen zu können, weisen die Teleskopschenkel 24 eine Schubführung 50 zur Verdrehsicherung des Achsrohrs 30 auf der Achswelle 32 auf. Diese besteht aus drei über den Umfang der Achswelle 32 verteilt angeordneten Laufbahnrillen 48, die sich über einen in Fig. 4 durch Endpunkte 52, 52' markierten Abschnitt der Achswelle 32 in deren axialer Richtung erstrecken. An das fahrgestellseitige Ende der Schubführung 50 schließt sich eine mit schraubenlinienförmiger Führungsbahn über einen Teil des Umfangs der Achswelle 32 zwischen Endpunkten 52' und 52" verlaufende Drehführung 54 an, deren Funktion weiter unten erläutert wird. Als Wälzkörper greift jeweils eine achsrohrseitig gelagerte Kugel 56 in die Laufbahnrillen 48 ein.

Zur Erhaltung einer durch den fahrgestellfernen Endpunkt 52 der Schubführung 50 bestimmten Fahrstellung und einer durch den fahrgestellnahen Endpunkt 52' vorgegebenen, eingeschobenen Parkstellung der Teleskopschenkel 24 ist ein Rastgesperre vorgesehen, welches aus einer an dem Achsrohr 30 mittels Halteschraube 58 und Feder 60 vorgespannt gelagerten Rastkugel 62 besteht, die in jeweils eine entsprechend angeordnete Rastausnehmung 64,64' im Mantel des Achsrohrs 32 einrastet. Auf diese Weise läßt sich die Spurweite der Seitenräder 26 durch Ausübung einer axialen Schubkraft ohne weitere Hilfsmittel verstellen.

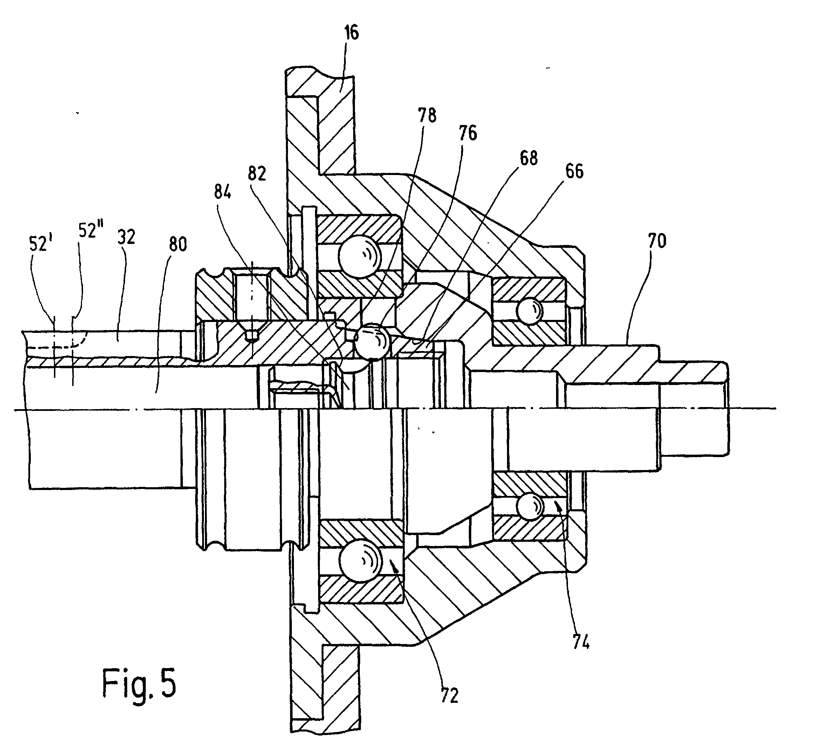

Die zur lösbaren Befestigung der Teleskopschenkel 24 vorgesehene Steckverbindung 36 besteht aus einem an der Achswelle 32 ausgebildeten kegeligen Stirnzapfen 66, der in eine formkomplementäre Bohrung 68 einer Achsaufnahme 70 einsteckbar ist. Die Sicherung der Steckverbindung erfolgt über drei in Umfangsrichtung verteilt angeordnete, in Radialbohrungen des Stirnzapfens 66 geführte Kugeln 76, welche in der Raststellung in Bohrungen 78 der Achsaufnahme 70 eingreifen. Um die Kugeln 76 zu lösen, ist ein Auslösemechanismus vorgesehen, der einen im Inneren der als Hohlwelle ausgebildeten Achswelle 32 geführten Auslösestößel 80 umfaßt. Dieser besitzt an seinem in den Stirnzapfen 66 ragenden Ende ein mit einer Ringnut 82 versehenes zylindrisches Druckstück 84, welches die Kugeln 76 radial nach innen abstützt. In der in Fig. 5 gezeigten Rast- bzw. Sperrstellung wird die Kugel 76 durch die äußere Nutflanke der Ringnut 82 radial nach außen gedrängt, während bei einer entsprechenden Axialverschiebung des Auslösestößels 80 die Kugel gegen den Nutgrund fällt und damit die Steckverbindung 36 freigibt.

Um die erforderliche Hubbewegung erzeugen zu können, steht der Auslösestößel 80 in der Raststellung am achsrohrseitigen Stirnende der Achswelle 32 mit einem Endabschnitt 86 über (Fig. 3). Der Endabschnitt 86 stößt in der Parkstellung des Teleskopschenkels 24 stirnseitig an die zugewandte Innenfläche des Nabendeckels 44 an. In dieser Anordnung kann die Hubbewegung durch ein Drehmoment auf das Seitenrad 26 ausgelöst werden, wobei die Drehführung 54 aufgrund ihrer Steigung für eine entsprechende Hubumsetzung sorgt.

Die Achsaufnahmen 70 sind über Rillenkugellager 72,74 um eine gemeinsame Drehachse an dem Chassisteil 16 drehbar gelagert. Aufgrund der gleichachsigen Ausrichtung lassen sich die Teleskopschenkel 24 über eine gemeinsame Antriebswelle 88 antreiben, welche an ihren Stirnenden jeweils über einen bei Drehung der Antriebswelle 88 in Antriebsrichtung sperrenden Freilauf 90 mit den zugewandten Stirnenden der Achsaufnahmen 70 verbunden ist. Als Antriebseinheit 12 ist ein an dem Chassisteil 16 angeordneter Elektromotor 92 vorgesehen, der aus einer Batterie 94 gespeist wird und über ein Getriebe 96 und einen nicht gezeigten Riementrieb mit der Antriebswelle 88 gekoppelt ist.

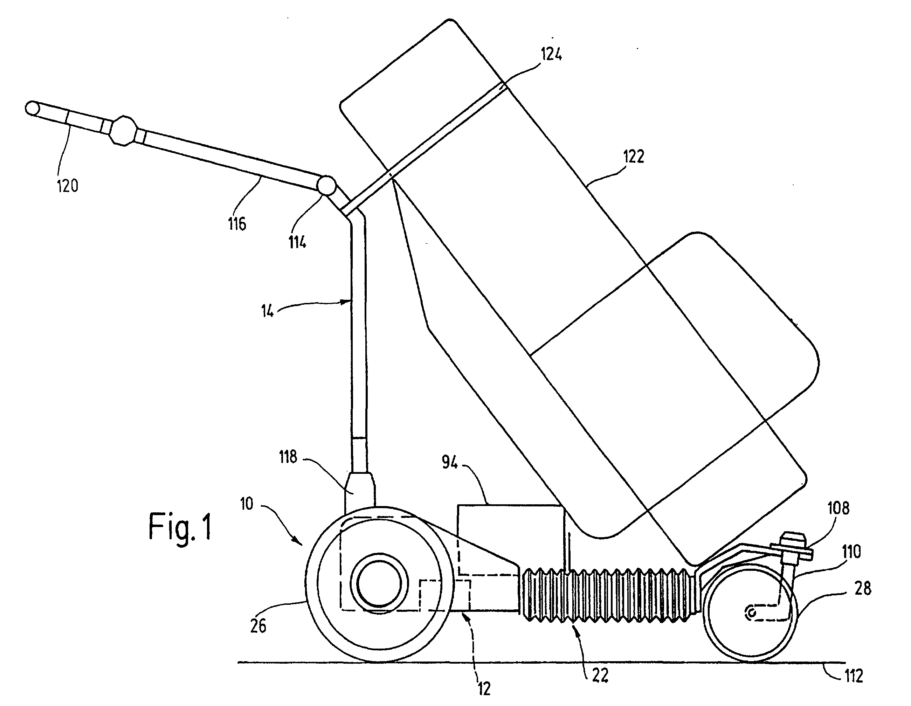

Um auch die Wagenlänge bei Nichtgebrauch des Transportwagens verringern zu können, weist das Längsmittelstück 18 des Fahrgestells 22 zwei zueinander parallele Verlängerungsstangen 98 auf, die durch Endstücke 100,102 miteinander verbunden und in einer an dem Chassisteil 16 angeordneten Längsführung 104 teleskopartig längsverschiebbar geführt sind. Die Endstellungen der Führungsstangen 98 lassen sich durch nicht gezeigte Sperrstücke sichern. Ein die Stangen 98 und die Führung 104 umschließender, in Fig. 1 nur abschnittsweise gezeigter Faltenbalg 106 verhindert das Eindringen von Schmutz und Wasser.

Das mit dem vorderen Verbindungsstück 100 der Verlängerungsstangen 98 starr verbundene Vorderteil 20 des Fahrgestells 22 weist ein Schwenklager 108 auf, in dem ein das Vorderrad 28 als Laufrad führendes Winkelstück 110 schwenkbar ist. Die Schwenkachse schneidet eine Aufstandsfläche 112 in Fahrtrichtung vor dem Aufstandspunkt des Vorderrads 28, wodurch der Geradeauslauf selbsttätig stabilisiert wird.

Die Lenkvorrichtung 14 besteht aus einer an einem Klappgelenk 114 faltbaren, entgegen der Fahrtrichtung abgewinkelten deichselartigen Lenkstange 116, welche über leicht lösbare Verbindungsmittel 118 starr mit dem Chassisteil 16 des Fahrgestells 22 verbindbar ist und welche an ihrem freien Ende einen Drehgriff 120 zur Motorsteuerung aufweist.

Auf dem vorstehend beschriebenen Golfwagen läßt sich eine Golftasche (Golfbag 122) transportieren, wobei der Taschenboden auf dem Vorderteil 20 des Fahrgestells 22 abgestützt ist. Eine an der Lenkstange 116 befestigte Halterung 124 umgreift den oberen Taschenabschnitt und sorgt für eine zur Entnahme der Golfschläger günstige Schrägstellung des Golfbags 122.

Grundsätzlich ist es auch möglich, den Transportwagen für anderes Transportgut vorteilhaft einzusetzen, beispielsweise für Kleinlasten in Fertigungsstätten.

## Patentansprüche

1. Transportwagen für Kleinlasten, insbesondere Golfwagen, mit einem ein insbesondere langgestrecktes Fahrgestell (22) und zwei an den quer zur Fahrtrichtung weisenden Längsseiten des Fahrgestells (22) gleichachsig angeordnete, vorzugsweise angetriebene Seitenräder (26) aufweisenden Fahrwerk (10) und einer an ihren freien Enden die Seitenräder (26) tragenden, unter Änderung von deren Spurweite teleskopisch längenverstellbaren Teleskopachse (24), die zwei an den Längsseiten des Fahrgestells (22) quer abstehende, jeweils eines der Seitenräder (26) führende Teleskopschenkel (24) aufweist, **dadurch gekennzeichnet, daß** die Teleskopschenkel (24) über eine verrastbare Steckverbindung (36) lösbar mit dem Fahrgestell (22) verbindbar sind.

2. Transportwagen nach Anspruch 1, **dadurch gekennzeichnet, daß** die Teleskopschenkel (24) durch ein äußeres Achsrohr (30) und eine in das Achsrohr eintauchende, fahrgestellseitig gelagerte Achswelle (32) gebildet sind.

3. Transportwagen nach Anspruch 2, **dadurch gekennzeichnet, daß** das Achsrohr (30) ein die Radnabe bildendes Flanschstück (46) aufweist, an dessen Stirnseite das Seitenrad (26) drehfest angeschraubt ist.

4. Transportwagen nach Anspruch 2 oder 3, **gekennzeichnet durch** Mittel (50) zur drehfesten Verbindung des Achsrohrs (30) und der Achswelle (32) der Teleskopschenkel (24) zumindest in einer fahrgestellfernen Fahrstellung und einer fahrgestellnahen Parkstellung der Seitenräder (26).

5. Transportwagen nach einem der Ansprüche 1 bis 4, **dadurch gekennzeichnet, daß** die Teleskopachse (24) eine axial verlaufende Schubführung (50) aufweist.

6. Transportwagen nach Anspruch 5, **dadurch gekennzeichnet, daß** die als Wälzführung ausgeführte Schubführung (50) durch mehrere, vorzugsweise drei über den Umfang der Achswelle (32) verteilte Laufbahnrillen (48) und jeweils einen achsrohrseitig gelagerten, vorzugsweise als Kugel ausgebildeten Wälzkörper (56) gebildet ist.

7. Transportwagen nach Anspruch 5, **dadurch gekennzeichnet, daß** die Schubführung (50) eine längs der Achswelle (32) verlaufende Führungsnut und einen in der Führungsnut geführten, mit dem Achsrohr (30) fest verbundenen Gleitstein aufweist.

8. Transportwagen nach einem der Ansprüche 1 bis 7, **gekennzeichnet durch** eine Sperrvorrichtung (62,64,64'), insbesondere ein Rastgesperre zur Sicherung einer fahrgestellfernen Fahrstellung und einer fahrgestellnahen Parkstellung der Seitenräder (26). 8

9. Transportwagen nach Anspruch 8, **dadurch gekennzeichnet, daß** die Sperrvorrichtung eine an dem Achsrohr (30) gefedert gelagerte, vorzugsweise über eine Halteschraube (58) abgestützte Rastkugel (62) aufweist, welche in der Fahr- und Parkstellung in jeweils eine entsprechend angeordnete Rastausnehmung (64,64') im Mantel der Achswelle (32) selbsttätig einrastet.

10. Transportwagen nach einem der Ansprüche 2 bis 9, **dadurch gekennzeichnet, daß** die Achswellen (32) einen kegeligen Stirnzapfen (66) aufweisen, der in eine kegelige Bohrung (68) einer an dem Fahrgestell (22) vorzugsweise über Rillenkugellager (72,74) drehbar gelagerten Achsaufnahme (70) einsteckbar ist.

11. Transportwagen nach einem der Ansprüche 2 bis 10, **dadurch gekennzeichnet, daß** die Achswellen (32) fahrgestellseitig einrastbare Rastmittel (76) und einen Auslösemechanismus (80,84) zum Auslösen der Rastmittel aus ihrer Raststellung aufweisen.

12. Transportwagen nach Anspruch 11, **dadurch gekennzeichnet, daß** die Achswellen als Hohlwellen (32) ausgebildet sind, und daß der Auslösemechanismus einen im Inneren der Hohlwelle (32) geführten Auslösestößel (80) aufweist, der durch Verschiebung des Achsrohres (30) in eine Hubbewegung versetzbar ist und dabei auf die Rastmittel (76) einwirkt.

13. Transportwagen nach einem der Ansprüche 4 bis 12, **gekennzeichnet durch** eine an das fahrgestellnahe Ende der Schubführung (50) anschließende, schraubenlinienförmig über einen Teil des Umfangs der Achswelle (32) verlaufende Drehführung (54), und einen bei Bewegung des Achsrohres (30) entlang der Drehführung (54) den Auslösestößel (80) in eine Hubbewegung versetzenden Anschlag (44).

14. Transportwagen nach Anspruch 12 oder 13, **dadurch gekennzeichnet, daß** der Auslösestößel (80) an seinem in den Stirnzapfen (66) eingreifenden Ende ein mit einer Ringnut (82) versehenes zylindrisches Druckstück (84) aufweist, das mindestens eine den Mantel des Stirnzapfens (66) durchgreifende, als Rastmittel bestimmte Kugel (76) in Abhängigkeit von der Hublage des Auslösestößels (80) mit einer Nutflanke oder dem Nutgrund der Ringnut (82) radial abstützt.

15. Transportwagen nach einem der Ansprüche 1 bis 14, **dadurch gekennzeichnet, daß** die mit gemeinsamer Drehachse angeordneten Teleskopschenkel (24) über jeweils einen Freilauf (90) mit den freien Enden einer gemeinsamen Antriebswelle (88) verbunden sind.

16. Transportwagen nach Anspruch 15, **dadurch gekennzeichnet, daß** auf dem Fahrgestell (22) ein vorzugsweise über einen Riementrieb mit der Antriebswelle (88) gekoppelter, aus einer Batterie (94) gespeister Elektromotor (92) angeordnet ist.

17. Transportwagen nach einem der Ansprüche 1 bis 16, **dadurch gekennzeichnet, daß** das Fahrwerk (10) ein in Fahrtrichtung im Abstand vorzugsweise vor den Seitenrädern (26) angeordnetes, insbesondere als Zwillingsrad ausgebildetes Stützrad (28) aufweist.

18. Transportwagen nach Anspruch 17, **dadurch gekennzeichnet, daß** das Stützrad (28) als Führungsrad unter Einhaltung eines Nachlaufs frei schwenkbar an einem Vorderteil (20) des Fahrgestells (22) aufgehängt ist.

19. Transportwagen nach Anspruch 17 oder 18, **gekennzeichnet durch** mindestens eine, vorzugsweise zwei zueinander parallele Verlängerungsstangen (98), die ein Längsmittelstück des Fahrgestells (22) bilden und unter Verkürzung des Radstandes in ein die Teleskopschenkel (24) tragendes hinteres Chassisteil (16) des Fahrgestells (22) einschiebbar sind.

20. Transportwagen nach einem der Ansprüche 1 bis 19, **gekennzeichnet durch** eine mit dem Fahrgestell (22) lösbar starr verbindbare, teilbar oder faltbare deichselartige Lenkvorrichtung (14).

21. Transportwagen nach Anspruch 20, **dadurch gekennzeichnet, daß** an der Lenkvorrichtung (14) eine Halterung (124) für eine Golftasche (122) angeordnet ist.

## Claims

1. Cart for transporting small loads, in particular a caddie cart, having a chassis unit (10), which comprises an, in particular, elongate chassis (22) and two preferably driven side wheels (26) disposed isoaxially on the longitudinal sides of the chassis (22) directed transversely to the direction of travel, and having a telescopic axle (24), which on its free ends carries the side wheels (26) and is telescopically adjustable in length with simultaneous variation of its track width and which comprises two telescopic limbs (24), which project transversely from the longitudinal sides of the chassis (22) and guide in each case one of the side wheels (26),
**characterized in that** the telescopic limbs (24) are releasably connectable to the chassis (22) by means of a latchable plug-in connection (36).

2. Cart according to claim 1, **characterized in that** the telescopic limbs (24) are formed by an outer axle tube (30) and an axle shaft (32), which engages into the axle tube and is mounted at the chassis side.

3. Cart according to claim 2, **characterized in that** the axle tube (30) has a flange piece (46), which forms the wheel hub and to the end face of which the side wheel (26) is non-rotatably screw-connected.

4. Cart according to claim 2 or 3, **characterized by** means (50) of non-rotatably connecting the axle tube (30) and the axle shaft (32) of the telescopic limbs (24) at least in a chassis-remote travel position and a chassis-adjacent parking position of the side wheels (26).

5. Cart according to one of claims 1 to 4, **characterized in that** the telescopic axle (24) comprises an axially extending push guide (50).

6. Cart according to claim 5, **characterized in that** the push guide (50) designed as a rolling guide is formed by a plurality of, preferably three, raceway grooves (48) distributed over the periphery of the axle shaft (32) and by, in each case, one rolling body (56) preferably in the form of a ball mounted at the axle tube side.

7. Cart according to claim 5, **characterized in that** the push guide (50) comprises a guide slot extending along the axle shaft (32) as well as a sliding block guided in the guide slot and connected in a fixed manner to the axle tube (30).

8. Cart according to one of claims 1 to 7, **characterized by** a locking apparatus (62, 64, 64'), in particular a detent locking mechanism for securing a chassis-remote travel position and a chassis-adjacent parking position of the side wheels (26).

9. Cart according to claim 8, **characterized in that** the locking apparatus comprises a detent ball (62), which is spring-mounted on the axle tube (30) and preferably supported via a retaining screw (58) and which in the travel position and parking position automatically latches into a suitably disposed detent recess (64 and 64' respectively) in the lateral surface of the axle shaft (32).

10. Cart according to one of claims 2 to 9, **characterized in that** the axle shafts (32) comprise a tapered end journal (66), which is pluggable into a tapered bore (68) of an axle receiver (70), which is mounted preferably by means of deep-groove ball bearings (72, 74) rotatably on the chassis (22).

11. Cart according to one of claims 2 to 10, **characterized in that** the axle shafts (32) at the chassis side comprise snap-in detent means (76) and a release mechanism (80, 84) for releasing the detent means from their detent position.

12. Cart according to claim 11, **characterized in that** the axle shafts are designed as hollow shafts (32), and that the release mechanism comprises a release push rod (80), which is guided in the interior of the hollow shaft (32) and which may be brought by displacement of the axle tube (30) into a lifting motion and in said case acts upon the detent means (76).

13. Cart according to one of claims 4 to 12, **characterized by** a rotary guide (54), which adjoins the chassis-adjacent end of the push guide (50) and extends in the shape of a helical line over part of the periphery of the axle shaft (32), and by a stop (44), which upon movement of the axle tube (30) along the rotary guide (54) sets the release push rod (80) into a lifting motion.

14. Cart according to claim 12 or 13, **characterized in that** the release push rod (80) on its end engaging into the end journal (66) has a cylindrical thrust piece (84), which is provided with an annular groove (82) and which in dependence upon the lifting position of the release push rod (80) with a groove flank or the groove base of the annular groove (82) radially supports at least one ball (76), which is specified as a detent means and engages through the lateral surface of the end journal (66).

15. Cart according to one of claims 1 to 14, **characterized in that** the telescopic limbs (24) disposed with a common axis of rotation are connected in each case by a free wheel mechanism (90) to the free ends of a common drive shaft (88).

16. Cart according to claim 15, **characterized in that** disposed on the chassis (22) is an electric motor (92), which is coupled by a belt drive to the drive shaft (88) and powered by a battery (94).

17. Cart according to one of claims 1 to 16, **characterized in that** the chassis (10) comprises a support wheel (28), in particular in the form of a twin wheel, which is disposed at a distance in the direction of travel preferably in front of the side wheels (26).

18. Cart according to claim 17, **characterized in that** the support wheel (28) is suspended as a guide wheel, while simultaneously maintaining a caster action, in a freely pivotal manner on a front part (20) of the chassis (22).

19. Cart according to claim 17 or 18, **characterized by** at least one, preferably two mutually parallel lengthening rods (98), which form a longitudinal middle piece of the chassis (22) and are insertable with simultaneous shortening of the wheelbase into a rear chassis part (16), which carries the telescopic limbs (24), of the chassis (22).

20. Cart according to one of claims 1 to 19, **characterized by** a sectional or collapsible pole-like steering apparatus (14), which is rigidly connectable in a releasable manner to the chassis (22).

21. Cart according to claim 20, **characterized in that** disposed on the steering apparatus (14) is a holding device (124) for a golf bag (122).

## Revendications

1. Chariot de transport pour petites charges, notamment chariot de golf, comprenant un dispositif de déplacement (10) présentant un châssis (22) notamment allongé et deux roues latérales (26) de préférence entraînées qui sont disposées sur un même axe sur les côtés longitudinaux du châssis (22) qui sont orientés transversalement à la direction de déplacement, ainsi qu'un essieu télescopique (24) portant à ses extrémités libres les roues latérales (26), qui est réglable en longueur de manière télescopique en modifiant l'empattement de ces dernières et qui présente deux fusées d'essieu télescopiques (24) faisant saillie transversalement des côtés longitudinaux du châssis (22) et guidant chacune l'une des roues latérales (26), **caractérisé en ce que** les fusées d'essieu télescopiques (24) peuvent être reliées de façon amovible au châssis (22) par l'intermédiaire d'un dispositif de liaison par enclenchement (36).

2. Chariot de transport selon la revendication 1, **caractérisé en ce que** les fusées d'essieu télescopiques (24) sont formées par un carter d'essieu tubulaire extérieur (30) et par un demi-arbre (32) pénétrant dans ledit carter et monté côté châssis.

3. Chariot de transport selon la revendication 2, **caractérisé en ce que** le carter d'essieu (30) présente un flasque (46) formant le moyeu de la roue, sur la face frontale duquel la roue latérale (26) est visée de façon à en être solidaire en rotation.

4. Chariot de transport selon la revendication 2 ou 3, **caractérisé par** des moyens (50) pour relier de façon solidaire en rotation le carter d'essieu (30) et le demi-arbre (32) des fusées télescopiques (24) tout au moins lorsque les roues latérales (26) sont dans une position de déplacement dans laquelle elles sont éloignées du châssis et dans une position d'arrêt dans laquelle elles sont proches du châssis.

5. Chariot de transport selon l'une des revendications 1 à 4, **caractérisé en ce que** l'essieu télescopique (24) présente une coulisse de poussée (50) s'étendant axialement.

6. Chariot de transport selon la revendication 5, **caractérisé en ce que** la coulisse de poussée (50) réalisée en tant que coulisse à éléments roulants est constituée de plusieurs, de préférence de trois gorges (48) réparties sur le pourtour du demi-arbre (32) et d'un élément roulant (56) monté côté carter d'essieu et de préférence réalisé en tant que bille.

7. Chariot de transport selon la revendication 5, **caractérisé en ce que** la coulisse de poussée (50) présente une rainure de guidage s'étendant le long du demi-arbre (32) et un coulisseau guidé dans la rainure de guidage et solidaire du carter d'essieu (30).

8. Chariot de transport selon l'une des revendications 1 à 7, **caractérisé par** un dispositif d'arrêt (62, 64, 64'), notamment un dispositif d'arrêt par encliquetage pour assurer aux roues latérales (26) une position de déplacement éloignée du châssis et une position d'arrêt proche du châssis.

9. Chariot de transport selon la revendication 8, **caractérisé en ce que** le dispositif d'arrêt présente une bille encliquetable (62) montée sur le carter d'essieu (30) de manière à faire ressort, de préférence supportée par une vis de retenue (58) qui, dans la position de déplacement et d'arrêt, s'enclenche automatiquement dans une encoche (64, 64') ménagée en conséquence dans l'enveloppe du demi-arbre (32).

10. Chariot de transport selon l'une des revendications 2 à 9, **caractérisé en ce que** les demi-arbres (32) présentent un tourillon frontal conique (66) qui peut être logé dans un perçage conique (68) d'un logement (70) monté sur le châssis (22) de façon à tourner de préférence par l'intermédiaire de roulements à billes rainurés (72, 74).

11. Chariot de transport selon l'une des revendications 2 à 10, **caractérisé en ce que** les demi-arbres (32) présentent des moyens d'enclenchement (76) pouvant s'enclencher côté châssis et un mécanisme de déclenchement (80, 84) pour libérer les moyens d'enclenchement de leur position enclenchée.

12. Chariot de transport selon la revendication 11, **caractérisé en ce que** les demi-arbres sont réalisés en tant qu'arbres creux (32), et **en ce que** le mécanisme de déclenchement comporte une tige de déclenchement (80) guidée à l'intérieur de l'arbre creux (32), laquelle tige peut effectuer un mouvement d'élévation du fait d'un déplacement du carter d'essieu (30) et agir ce faisant sur les moyens d'enclenchement (76).

13. Chariot de transport selon l'une des revendications 4 à 12, **caractérisé par** une coulisse de rotation (54) faisant suite à l'extrémité de la coulisse de poussée (50) qui est proche du châssis et s'étendant en forme d'hélice sur une partie du pourtour du demi-arbre (32), et par une butée (44) qui contraint la tige de déclenchement (80) à effectuer un mouvement vers le haut lorsque le carter d'essieu (30) se déplace le long de la coulisse de rotation (54).

14. Chariot de transport selon la revehdication 12 ou 13, **caractérisé en ce que** la tige de déclenchement (80) présente à son extrémité venant en prise avec le tourillon frontal (66) un élément presseur (84) cylindrique muni d'une rainure annulaire (82), lequel élément supporte radialement avec un flanc ou le fond de la rainure annulaire (82), selon la position en hauteur de la tige de déclenchement (80), au moins une bille (76) faisant fonction de moyen d'enclenchement et traversant l'enveloppe du tourillon frontal (66).

15. Chariot de transport selon l'une des revendications 1 à 14, **caractérisé en ce que** les fusées télescopiques (24) possédant un axe de rotation commun sont chacune reliées par l'intermédiaire d'une roue libre (90) aux extrémités libres d'un arbre moteur commun (88).

16. Chariot de transport selon la revendication 15, **caractérisé en ce qu'**un moteur électrique (92) alimenté par une batterie (94) et accouplé à l'arbre moteur (88) de préférence au moyen d'une transmission par courroie est placé sur le châssis (22).

17. Chariot de transport selon l'une des revendications 1 à 16, **caractérisé en ce que** le dispositif de déplacement (10) comporte une roue d'appui (28) notamment réalisée en tant que roues jumelées, qui est disposée de préférence devant les roues latérales (26) par rapport au sens de déplacement et à distance de celles-ci.

18. Chariot de transport selon la revendication 17, **caractérisé en ce que** la roue d'appui (28) faisant fonction de roue de guidage est accrochée à une partie avant (20) du châssis (22) en respectant une chasse lui permettant de pivoter librement.

19. Chariot de transport selon la revendication 17 ou 18, **caractérisé par** au moins une, de préférence deux barres de prolongement (98) parallèles entre elles qui forment une partie centrale longitudinale du châssis (22) et qui sont rétractables à l'intérieur d'une partie arrière (16) du châssis (22) qui porte les fusées d'essieu télescopiques (24), réduisant ainsi l'empattement.

20. Chariot de transport selon l'une des revendications 1 à 19, **caractérisé par** un dispositif de direction (14) divisible ou pliable, semblable à un attelage de remorque, qui peut être relié de façon rigide et amovible au châssis (22).

21. Chariot de transport selon la revendication 20, **caractérisé en ce qu'**un dispositif de fixation (124) pour un sac de golf (122) est monté sur le dispositif de direction (14).
